# EUROPEAN PATENT APPLICATION

(11) **EP 3 333 724 A1**
(43) Date of publication of application: **13.06.2018**
(21) Application number: 16202923.5
(22) Date of filing: 08.12.2016
(51) Int. Cl.: G06F 17/30

(54) **COMPUTER-IMPLEMENTED GOAL DRIVEN DYNAMIC SEMANTIC DATA CONVERSION METHOD**

(71) Applicant: Agfa Healthcare, 2640 Mortsel (BE)
(72) Inventor: Sun, Hong, 2640 Mortsel (BE); De Roo, Jos, 2640 Mortsel (BE); Depraetere, Kristof, 2640 Mortsel (BE)
(74) Representative: Verbrugghe, Anne Marie L.

(57) **Abstract**

At deployment time a specified domain query is applied to a predefined set of sample data and a set of predefined conversion rules to generate proof of the conversion process, then a customized configuration of source data and conversion rules that are required to provide answers to the specified query is generated by parsing the proof, the customized configuration being applied at runtime.

## Description

### FIELD OF THE INVENTION

The present invention is in the field of semantic web technology.

More specifically the invention relates to a computer-implemented semantic data conversion method that allows end users to specify customized queries in an application domain at deployment time, and dynamically generate configurations to automate semantic data conversion processes from source domain to application domain at runtime.

More specifically the invention relates to such a method for application in the context of electronic health records.

### BACKGROUND OF THE INVENTION

Semantic data conversion is widely used to convert data from a source domain to an application domain, so as to allow source data being understood by end users.

An example of a source domain is Agfa HealthCare's ORBIS system which is an enterprise-wide hospital and clinical information system designed to enhance the quality of patient care. It provides fast and complete availability of patients' histories, including all images and clinical and administrative data. The source data of the ORBIS system is stored in Oracle database, the data structure of the ORBIS is defined by corresponding Oracle database schema.

An example of an application domain is Agfa's clinical domain model, which is a semantic model that defines a set RDF graphs representing clinical domain entities which can be used to formalize any kind of clinical data and workflow. The model uses 3rd-parties ontology to enable the interoperability and re-use throughout the healthcare community.

The conversion process is mostly developed as processing a set of data that expressed with fixed patterns together with a set of conversion rules, following predefined settings.

It is extremely difficult to allow a user to freely send a query in application domain (expressed with application domain semantics), and let the system automatically decide which input data and conversion rules are needed so as to generate data expressed with application semantics as the query result.

It is an aspect of the present invention to provide a solution to this problem.

### SUMMARY OF THE INVENTION

The above-mentioned problem is solved by a computer-implemented semantic data conversion method as set out in claim 1.

According to this method at deployment time a query is specified in an application domain. This query is applied to a predefined set of sample data from at least one source domain and a set of predefined conversion rules to generate proof of the conversion process from source to application domain. Then a customized configuration of source data and conversion rules is generated that are required to provide answers to the specified query by parsing said proof.

The proof parsing is performed with a semantic reasoned such as a N3 reasoner.

At runtime the generated configuration can be applied to provide answers to a query.

The invention is in particular very useful for application in the integrated care domain.

Specific features for preferred embodiments of the invention are set out in the dependent claims.

The method of the present invention allows end users to specify customized queries in an application domain at deployment time and dynamically generate configurations to facilitate a semantic data conversion processes from source domain to application domain at runtime.

Further advantages and embodiments of the present invention will become apparent from the following detailed description.

### DETAILED DESCRIPTION OF THE INVENTION

Semantic reasoning systems play an important role in the implementation of knowledge based systems.

A semantic reasoner (reasoning engine, rules engine), is a piece of software able to infer logical consequences from a set of asserted facts or axioms. Inference rules are commonly specified by means of an ontology language, and often a description logic language.

Notation3, also called N3, is a shorthand non-XML serialization of Resource Description Framework models, designed with human-readability in mind. N3 is much more compact and readable than XML RDF notation. The format is being developed by Tim Berners-Lee and others from the Semantic Web community.

The present invention provides a solution to the aforementioned challenge by analysizing the proof of a web-based reasoning engine such as N3 reasoner.

A proof explains each steps that a reasoner takes that leads to the answers of a single query.

Common N3 reasoners like EYE and CWM are able to provide proof for their reasoning processes.

The concept of the invention comprises two runs.

In the first run, when an application domain query is given, the query is applied to a list of reasonably sized sample input data set, as well as all the available conversion rules, so as to retrieve answers to the application domain query, together with the proof of how the answers are generated.

The sample data are retrieved from a database or come from physical data source such as a Picture Archiving System (PACS), for example from Agfa HealthCare's IMPAX system or from an information system such as Agfa HealthCare's ORBIS system.

By parsing the proof of the reasoner, the system knows which input data and rules are needed in order to answer the query.

A customized configuration that specifies the requested input data and requested conversion rules is then generated.

In the second run, this generated configuration can automatically guide the system to retrieve and convert data so as to provide answer to the specified application domain query at run time.

Below the steps are explained in detail:
At development time:
   1. Predefine a set of patterns in the source domain (e.g. Agfa HealthCare's ORBIS database schema). In a specific embodiment when applied to medical data of a patient, a pattern is a graph representation that models an object (e.g. a clinical object).
   2. Predefine a set of patterns in the application domain (e.g. Agfa's clinical domain model).
   3. Define a set of conversion rules that convert data from source domain to application domain.
At deployment time:
   4. For each source pattern, retrieve a reasonable size of sample data (large enough to represent the available data in the data source), these sample data are named as sample source data entity. The sample data are retrieved from a data base or from a physical source such as a picture archiving systemoran information system.
   5. Allow an end user to freely specify one or more queries in the application domain as a query pattern.
   6. Use a web logic based reasoner (e.g. an N3 reasoner) to answer the query specified by the end user. The reasoner generates a proof by taking all the sample source data entities retrieved in step 4, apply all the conversion rules developed in step 3 together with the query specified in step 5.
   7. Automatically extract the rules that are contained in the proof, aggregate them into a rule set, by processing proof (extracting rules stated in the proof).
   8. Automatically extract the names of the sample source data entities mentioned in the proof, by processing the proof.
   9. Generate a configuration for the query specified in step 5. The configuration specifies which source data to retrieve (as specified in step 8) and which rules to apply (as specified in step 7).
   10. Deploy the configuration generated in step 9.
At run time:
   11. The end user is able to launch the query specified in step 5.

### Example:

The example below is an abstracted example aimed to illustrate the method of the present invention.
S1=>A1.
S2=>A2.
S3=>A3.
S1, S2, S3 represent source domain data patterns
A1, A2, A3 represent application domain data patterns

Let Q be a pattern that is requested by a user, also called query pattern. Let Q be a pattern consists sub-patterns from A2 and A3.

Then S2 and S3 are the relevant source data pattern to obtain Q as query pattern.

In order to be able to provide answers to Q, the system only needs to involve the data source pattern S2 and S3 as well as the relevant rules needed to obtain this query pattern. This invention automatically instructs the system to retrieve only the relevant source data, and apply only the relevant rules to reach answers to queries.

### Example of query BMI:

The example below demonstrates the generation of customized configuration to answer a query on application domain on BMI related data.

### Source data A:

The text marked in bold will contribute to providing an answer to the query (Table 5) on application domain. The data from patient 2 is marked as black because it does not contain height value, thus can not produce the BMI as requested by the query in Table 5.

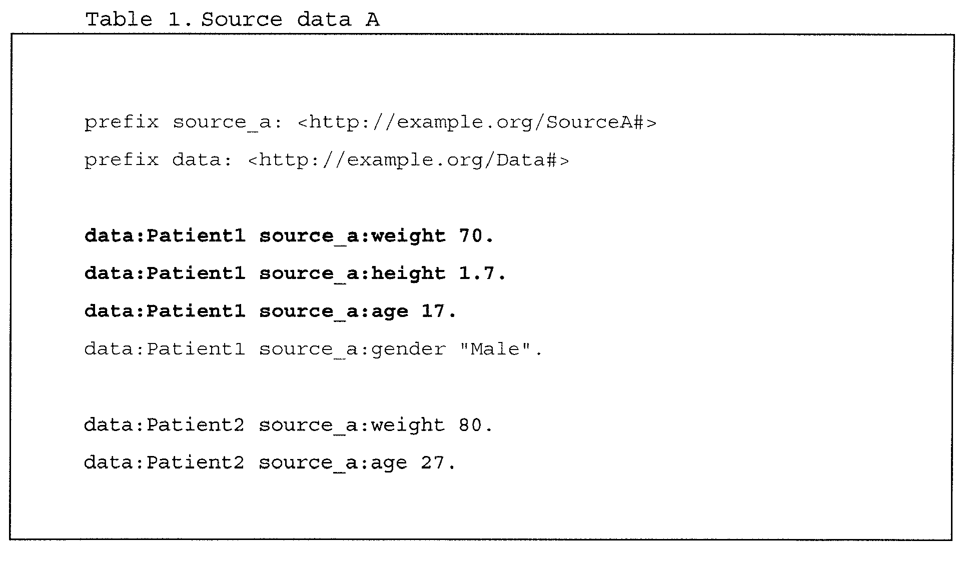

### Source data B:

The text marked in bold will contribute to providing an answer to the query (Table 5) on application domain.

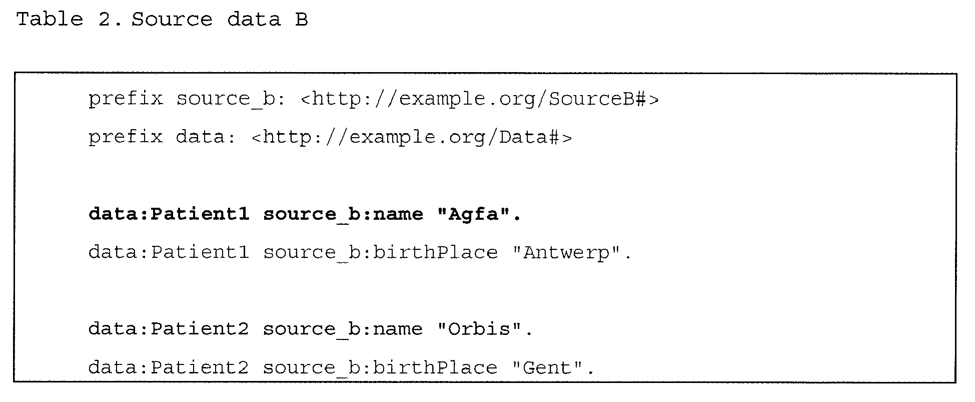

### Source data C:

This data source is not making any contribution to providing an answer to the query (Table 5) on application domain.

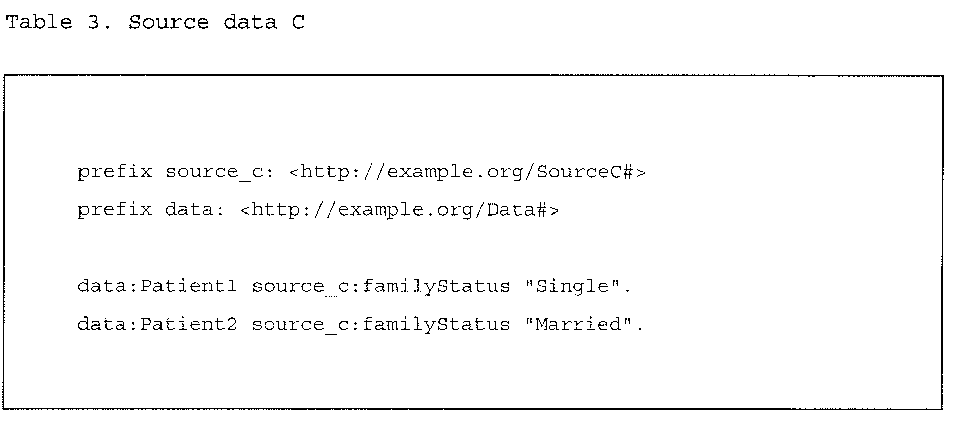

### Source to application domain conversion rules:

The source to application domain conversion rules state all the known conversions on the stated source data.

**Table 4. Source to application domain conversion rules**

| |
|---|
| ```
prefix source_a: <http://example.org/SourceA#>
 prefix source_b: <http://example.org/SourceB#>
 prefix source_c: <http://example.org/SourceC#>
 prefix domain: <http://example.org/Domain#>
 prefix math: <http://www.w3.org/2000/10/swap/math#>
  
  
 {?patient source_a:weight ?weight.}
 =>
 {?patient domain:weight ?weight.} .
 {?patient source_a:height ?height.}
 =>
 {?patient domain:height ?height.} .
 {?patient source_a:age ?age.}
 =>
 {?patient domain:age ?age.} .
 {?patient source_a:gender ?gender.}
 =>
 {?patient domain:gender ?gender.} .
 {?patient source_b:name ?name.}
 =>
 {?patient domain:name ?name.} .
 {?patient source_b:birthPlace ?birthPlace.}
 =>
 {?patient domain:birthPlace ?birthPlace.}.
 {?patient source_c:familyStatus ?familyStatus.}
 =>
 {?patient domain:familyStatus ?familyStatus.}.
  
  
 {?patient domain:weight ?weight.
 ?patient domain:height ?height.
  
  
 # calculation of BMI, this is a simplified example which does not
 take into account the age and temporal relation between weight and height
 test.
 (?weight (?height 2)!math:exponentiation) math:quotient ?bmi}
 =>
 {?patient domain:bmi ?bmi.}
``` |

### Query over application domain:

A query over appliccation application domain indicates what content is expected by the end user on application domain. We state query as *Query*_*Pattern* => *Query*_*Pattern*. In this case, the end user requests bmi, age and name.

**Table 5. Query over application domain**

| |
|---|
| ```
 prefix domain: <http://example.org/Domain#>
  
  
 {
 ?patient domain:bmi ?bmi.
 ?patient domain:age ?age.
 ?patient domain:name ?name.
 }
 =>
 {
 ?patient domain:bmi ?bmi.
 ?patient domain:age ?age.
 ?patient domain:name ?name.
 }.
``` |

### Proof:

A proof records the steps that lead to the conclusions, the relevant data and rules are indicated:
For example, lemma 16 records a rule that converts the height expressed with source domain to application domain.
{?x_0_6 source_a:height ?x_1_6} => {?x_0_6 domain:height ?x_1_6}.

Meanwhile, lemma 15 gives the fact :
data:Patient1 source_a:height 1.7.
and indicates the source the fact is from:
   r:because [ a r:Parsing; r:source
<file:///d:/work/demo/sample_source_data_a.ttl>].

By processing the proof, we may aggregate the rules used in the conversion process, meanwhile also get the knowledge on which source data is needed in order to answer the specified query on application domain.

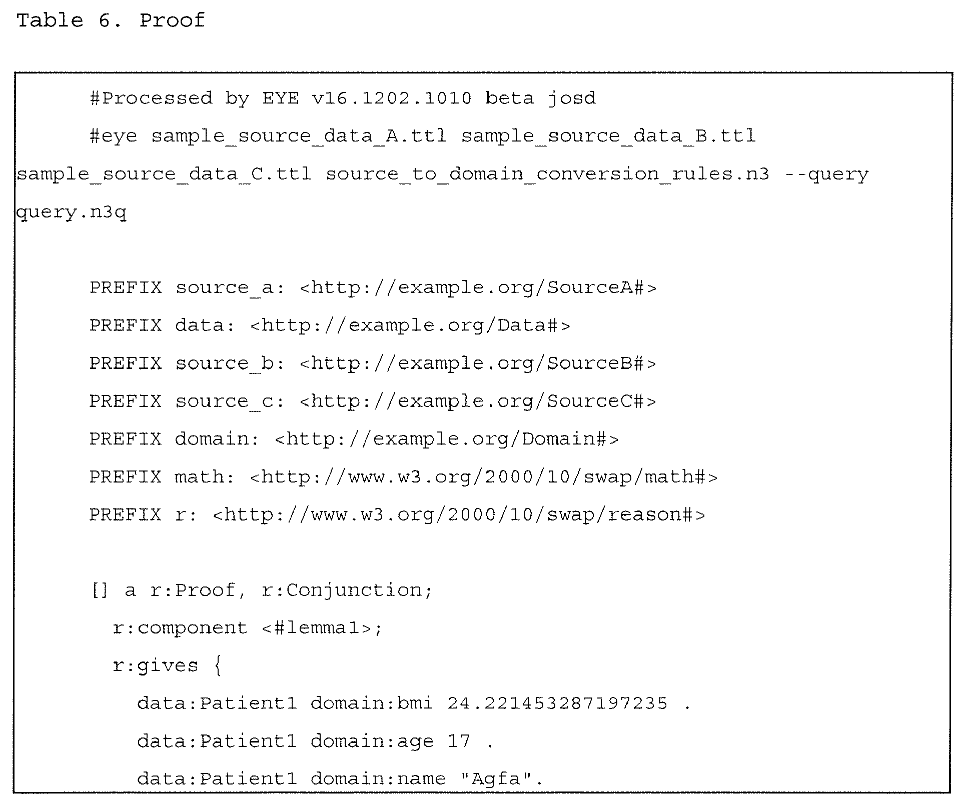

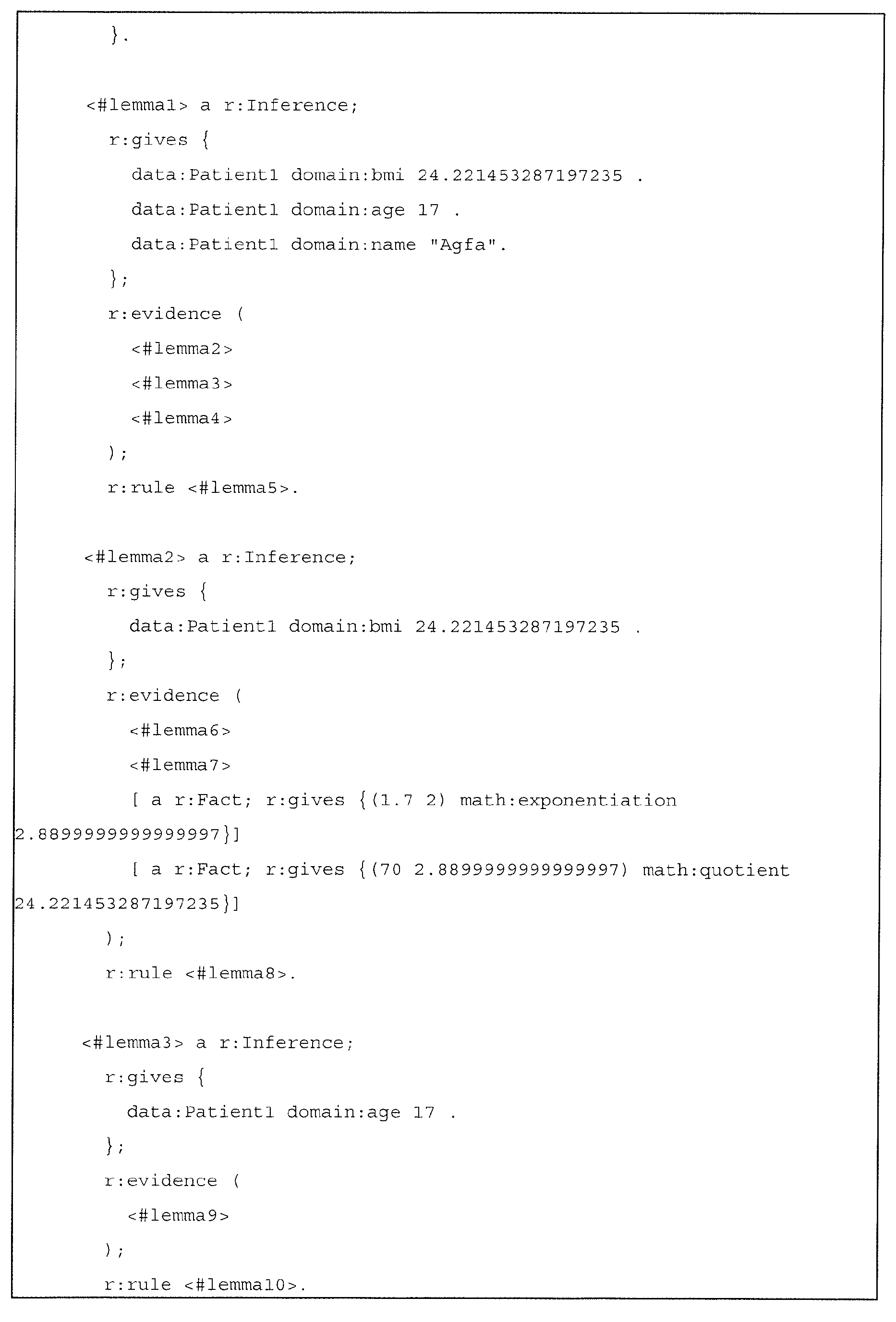

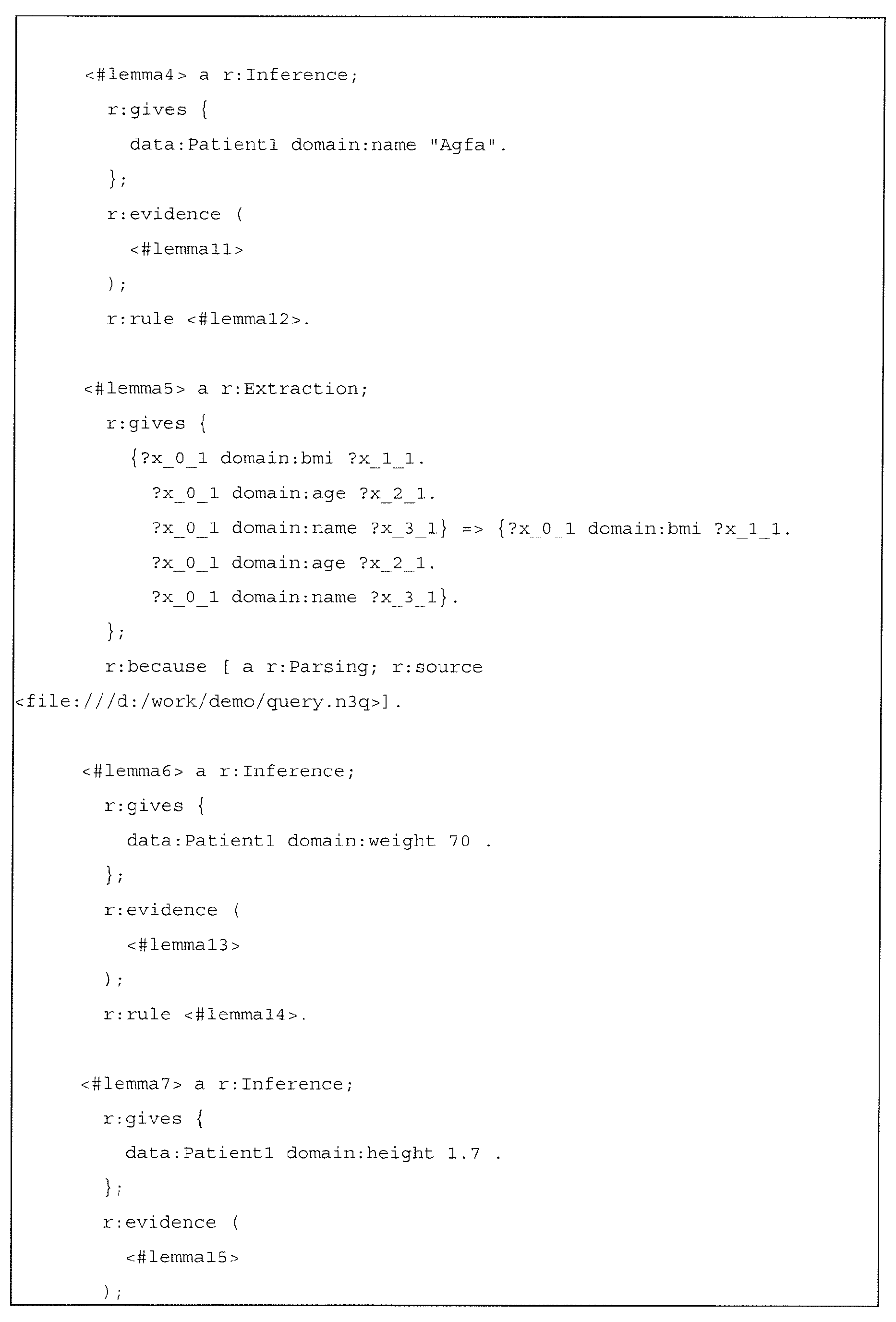

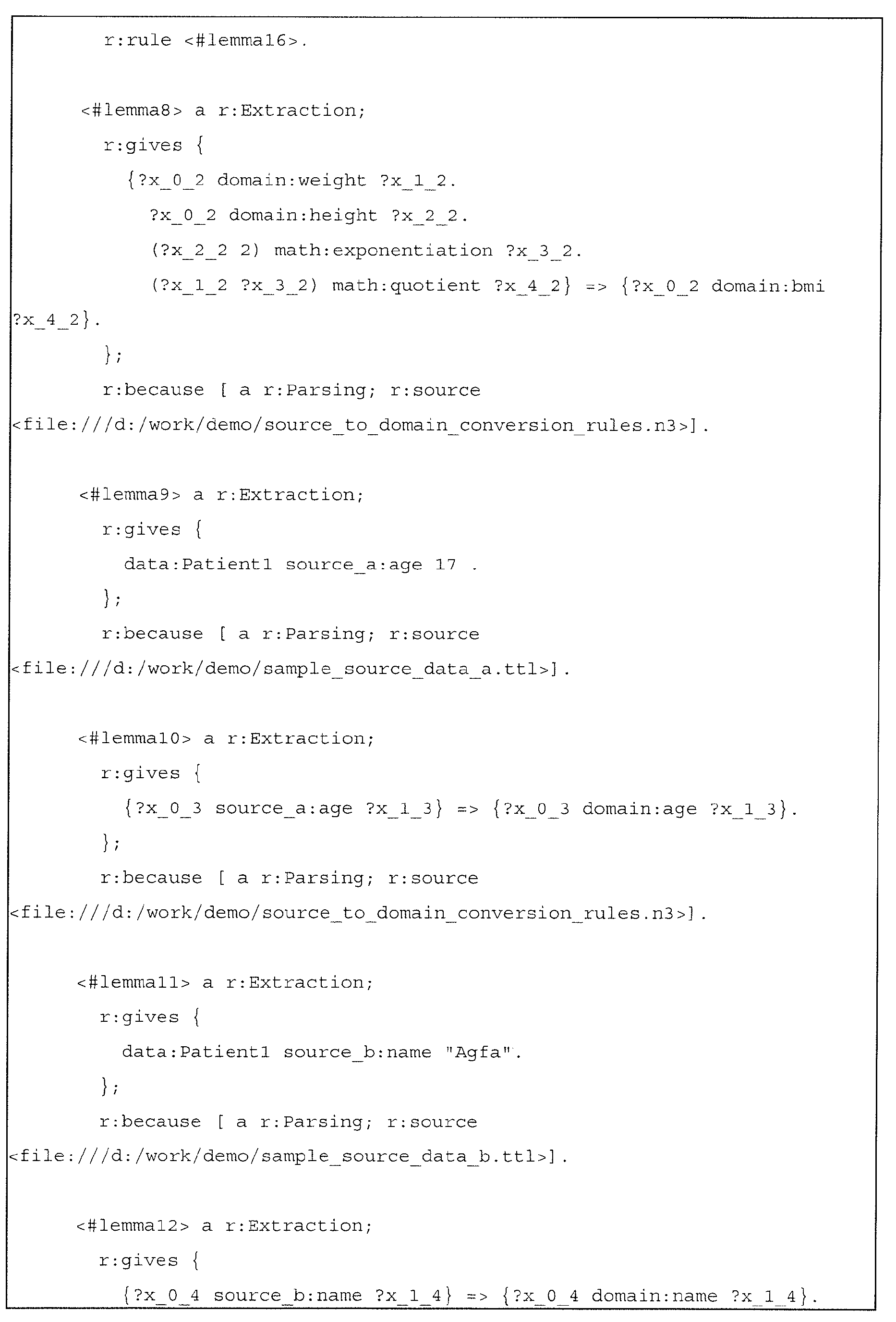

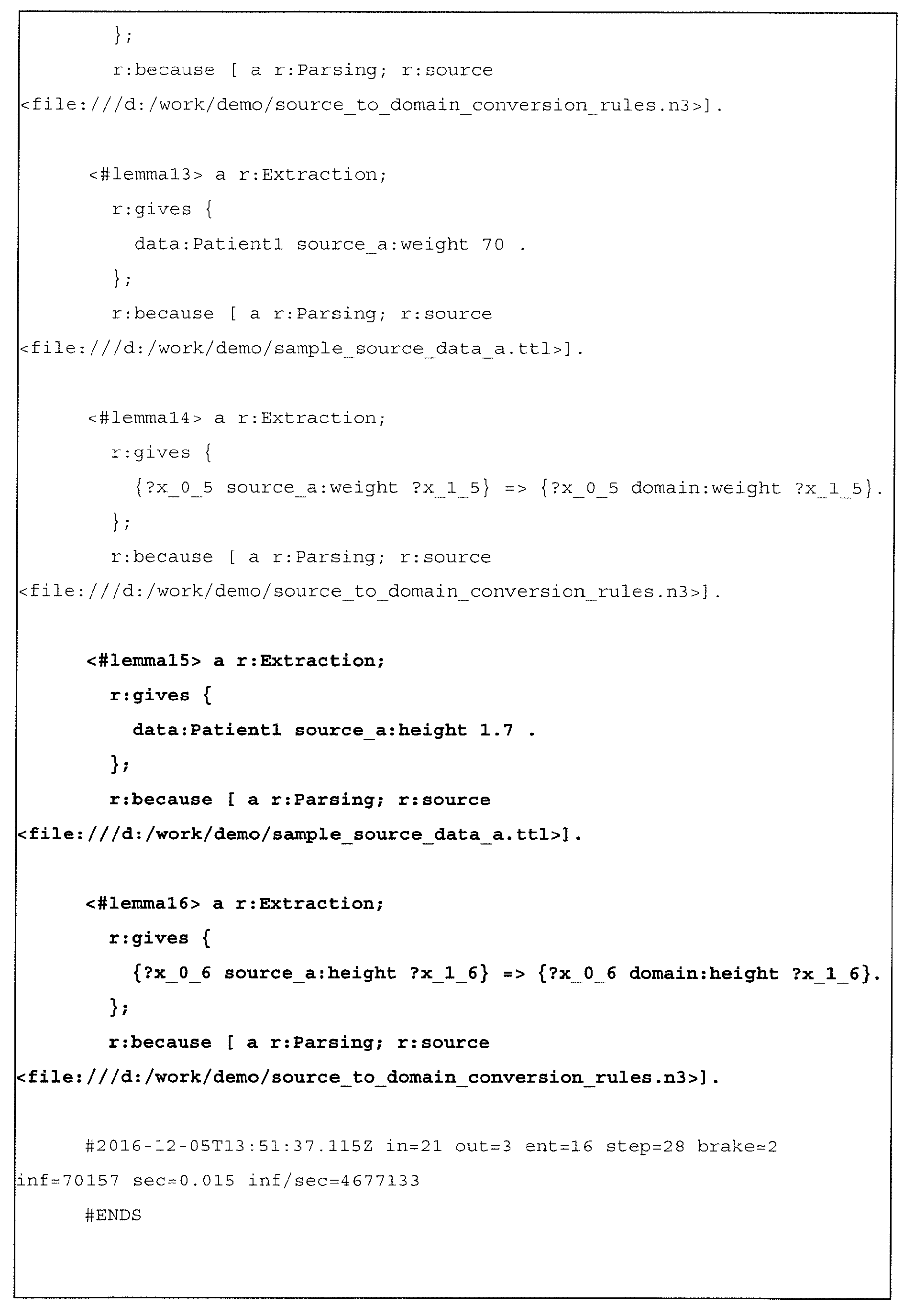

The table below shows the query rule that may process the proof, and extract the rules used in the conversion process, as indicated in the proof (e.g. lemma 16):

**Table 7. Query rule that extract rules**

| |
|---|
| ```
 PREFIX e: <http://eulersharp.sourceforge.net/2003/03swap/log-rules#>
 PREFIX r: <http://www.w3.org/2000/10/swap/reason#>
 PREFIX string: <http://www.w3.org/2000/10/swap/string#>
 PREFIX log: <http://www.w3.org/2000/10/swap/log#>
  
  
 {
      ?lemma r:rule ?extraction.
      ?extraction a r:Extraction; r:gives ?rule_universal;
     r:because [ a r:Parsing; r:source ?source].
      ?source log:uri ?source_string.
      ?scope e:fail { ?source_string string:contains ".n3q". }
      ?rule_universal e:labelvars ?rule.
 }=> ?rule.
``` |

By applying the query in Table 7 to the proof presented in Table 6, we can get the output in Table 8, which aggregates the conversion rules indicated in the proof.

**Table 8. Extracted rules**

| |
|---|
| ```
 #Processed by EYE v16.1202.1010 beta josd
 #eye --nope proof.n3 --query rule_extraction_query.n3q
  
  
 PREFIX source_a: <http://example.org/SourceA#>
 PREFIX data: <http://example.org/Data#>
 PREFIX source_b: <http://example.org/SourceB#>
 PREFIX source_c: <http://example.org/SourceC#>
 PREFIX domain: <http://example.org/Domain#>
 PREFIX math: <http://www.w3.org/2000/10/swap/math#>
 PREFIX r: <http://www.w3.org/2000/10/swap/reason#>
 PREFIX e: <http://eulersharp.sourceforge.net/2003/03swap/log-rules#>
 PREFIX string: <http://www.w3.org/2000/10/swap/string#>
 PREFIX log: <http://www.w3.org/2000/10/swap/log#>
  
  
 {?U_0 domain:weight ?U_1.
  ?U_0 domain:height ?U_2.
  (?U_2 2) math:exponentiation ?U_3.
  (?U_1 ?U_3) math:quotient ?U_4} => {?U_0 domain:bmi ?U_4}.
 {?U_10 source_a:age ?U_11} => {?U_10 domain:age ?U_11}.
 {?U_14 source_b:name ?U_15} => {?U_14 domain:name ?U_15}.
 {?U_18 source_a:weight ?U_19} => {?U_18 domain:weight ?U_19}.
 {?U_22 source_a:height ?U_23} => {?U_22 domain:height ?U_23}.
  
  
 #2016-12-05T14:56:48.504Z in=83 out=5 ent=5 step=5 brake=2 inf=89142
 sec=0.046 inf/sec=1937870
 #ENDS
``` |

The table below shows the query rule that may process the proof, and extract the source used in the conversion, as indicated in the proof (e.g. lemma 15):

**Table 9. Query rule that extract data sources**

| |
|---|
| ```
 prefix e: <http://eulersharp.sourceforge.net/2003/03swap/log-rules#>
 prefix r: <http://www.w3.org/2000/10/swap/reason#>
 prefix string: <http://www.w3.org/2000/10/swap/string#>
 prefix log: <http://www.w3.org/2000/10/swap/log#>
  
  
 {
      ?parsing a r:Parsing; r:source ?source.
      ?source log:uri ?source_string.
      ?source_string string:contains ".ttl".
      }=> {:input r:source ?source.}.
``` |

By applying the query in Table 9 to the proof presented in Table 6, we get the output Table 10, which indicates only source data A and source data B are needed to answer the query in application domain, while source data C is not needed.

**Table 10. Extracted data sources**

| |
|---|
| ```
 #Processed by EYE v16.1202.1010 beta josd
 #eye --nope proof.n3 --query source_extraction_query.n3q
  
  
 PREFIX source_a: <http://example.org/SourceA#>
 PREFIX data: <http://example.org/Data#>
 PREFIX source_b: <http://example.org/SourceB#>
 PREFIX source_c: <http://example.org/SourceC#>
 PREFIX domain: <http://example.org/Domain#>
 PREFIX math: <http://www.w3.org/2000/10/swap/math#>
 PREFIX r: <http://www.w3.org/2000/10/swap/reason#>
 PREFIX e: <http://eulersharp.sourceforge.net/2003/03swap/log-rules#>
 PREFIX string: <http://www.w3.org/2000/10/swap/string#>
 PREFIX log: <http://www.w3.org/2000/10/swap/log#>
  
  
 <file:///d:/work/demo/source_extraction_query.n3q#input> r:source
 <file:///d:/work/demo/sample_source_data_a.ttl>.
 <file:///d:/work/demo/source_extraction_query.n3q#input> r:source
 <file:///d:/work/demo/sample_source_data_b.ttl>.
 #2016-12-05T13:52:25.302Z in=83 out=2 ent=2 step=4 brake=1 inf=79484
 sec=0.078 inf/sec=1019026
 #ENDS
``` |

The system is then able to generate a customized configuration, which would then only retrieve source data A and B (as indicated in Table 10), and only apply the needed conversion rules stated in Table 8. The customized configuration is more optimal. ■

## Claims

1. A computer-implemented semantic data conversion method wherein at deployment time a query is specified in an application domain, this query is applied to a predefined set of sample data from at least one source domain and a set of predefined conversion rules to generate proof of the conversion process from source to application domain and a customized configuration of source data and conversion rules is generated that are required to provide answers to the specified query by parsing said proof.

2. A method according to claim 1 wherein said proof parsing is performed with an N3 reasoner.

3. A method according to claim 1 wherein the generated configuration is applied to provide answers to said query at runtime.

4. A method according to claim 1 wherein said application domain is integrated care.
